Europäisches Patentamt

European Patent Office

Office européen des brevets

(11) Veröffentlichungsnummer: **0 173 767**
**A1**

## (12) EUROPÄISCHE PATENTANMELDUNG

(21) Anmeldenummer: **84114642.6**

(51) Int. Cl.⁴: **G 21 C 7/16**

(22) Anmeldetag: **01.12.84**

(30) Priorität: **03.09.84 CH 4200/84**

(43) Veröffentlichungstag der Anmeldung:
**12.03.86 Patentblatt 86/11**

(84) Benannte Vertragsstaaten:
**AT BE CH DE FR GB IT LI LU NL SE**

(71) Anmelder: **GEBRÜDER SULZER AKTIENGESELLSCHAFT**
**Zürcherstrasse 9**
**CH-8401 Winterthur(CH)**

(72) Erfinder: **Straub, Hermann**
**Seuzacherstrasse 62**
**CH-8400 Winterthur(CH)**

(74) Vertreter: **Dipl.-Ing. H. Marsch Dipl.-Ing. K. Sparing**
**Dipl.-Phys.Dr. W.H. Röhl Patentanwälte**
**Rethelstrasse 123**
**D-4000 Düsseldorf(DE)**

(54) **Anlage mit einem nuklearen Reaktor.**

(57) Der Reaktor weist ein Druckgefäss auf, in dem ein Kühlmedium sowie ein Reaktorkern enthalten sind. Der Reaktorkern ist mit vertikal bewegbaren Steuerstäben (6) versehen, an denen Absorberstäbe (7) befestigt sind. Jeder rohrförmige Steuerstab (6) umgibt unter Freilassung eines spaltförmigen Ringraumes (100) eine ebenfalls rohrförmige, unbewegliche Führungsstange (60), die länger als der Steuerstrab ist. Zum Bewegen der Steuerstäbe (6) sind Fördermittel vorhanden, die Kühlmedium aus dem Druckgefäss unter Druck dem Inneren der Führungsstangen zuführen. Jeder spaltförmige Ringraum (100) kommuniziert einerseits über Verbindungsöffnungen (63, 65) mit dem Inneren der zugehörigen Führungsstange (60) und andererseits über mindestens zwei verschieden stark wirkende, ringförmige Drosselstellen (17, 18) mit dem Inneren des Druckgefässes. Die eine Drosselstelle (17) ist am oberen Ende und die andere Drosselstelle (18) am unteren Ende des zugehörigen Steuerstabes (6) angeordnet.

Bei zunehmender Kühlmediummenge im Inneren der Führungsstangen verschieben sich die Steuerstäbe axial nach oben, wogegen bei abnehmender Kühlmediummenge im Inneren der Führungsstangen die Steuerstäbe sich abwärts bewegen.

./...

EP 0 173 767 A1

Fig. 2

0173767

P.5903 Stph

Gebrüder Sulzer Aktiengesellschaft, Winterthur, Schweiz

Anlage mit einem nuklearen Reaktor

Die Erfindung betrifft eine Anlage mit einem nuklearen Reaktor, insbesondere Heizreaktor, der ein Druckgefäss aufweist, in dem ein Kühlmedium sowie ein Reaktorkern enthalten sind, der im wesentlichen aus geraden vertikalen, kanalartigen, Spaltmaterial enthaltenden Brennelementen und dazwischen angeordneten, vertikal bewegbaren Steuerstäben besteht, an denen Absorberstäbe befestigt sind, wobei Fördermittel vorhanden sind, die zum Bewegen der Steuerstäbe Kühlmedium aus dem Druckgefäss unter Druck setzen.

Es ist eine solche Anlage bekannt, in der die Steuerstäbe mittels je eines hydraulischen Kolben-Zylindersystems auf- und abwärts bewegt werden. Obwohl diese Systeme im allgemeinen zuverlässig arbeiten, weisen sie zwei wesentliche Nachteile auf:

- Die Kolben-Zylindersysteme erweisen sich als kostspielig in der Anschaffung und im Unterhalt, da ihre Wirksamkeit weitgehend von einer guten Abdichtung zwischen Kolben und Zylinder abhängt. Die Bedeutung dieser Kosten lässt sich erkennen, wenn man die Anzahl Steuerstäbe in einem Reaktor berücksichtigt, nämlich rund 200 für einen Siedewasserreaktor mit einer Leistung von 1300 MW.

- Die Höheneinstellung der Steuerstäbe erfordert eine aufwendige Steuerung.

Es ist Aufgabe der Erfindung, eine Anlage der eingangs genannten Gattung zu schaffen, in der der Antrieb und die Steuerung der Steuerstäbe, ohne deren Zuverlässigkeit zu beeinträchtigen, einfacher und kostengünstiger in der Herstellung und im Unterhalt als in der bekannten Anlage sind.

Diese Aufgabe wird erfindungsgemäss dadurch gelöst, dass jeder rohrförmige Steuerstab unter Freilassung eines spaltförmigen Ringraumes eine ebenfalls rohrförmige, relativ zu den Brennelementen unbewegliche Führungsstange umgibt, die länger als der Steuerstab ist, mindestens in ihrer unteren Hälfte, dass die Fördermittel druckseitig mit dem Inneren der Führungsstangen verbunden sind, dass jeder spaltförmige Ringraum einerseits über Verbindungsöffnungen mit dem Inneren der zugehörigen Führungsstange und andererseits über mindestens zwei verschieden stark wirkende, im wesentlichen ringförmige Drosselstellen, von denen jeweils eine am einen Ende und die andere am anderen Ende des zugehörigen Steuerstabes angeordnet ist, mit dem Inneren des Druckgefässes kommuniziert und dass die Verbindungsöffnungen und die Drosselstellen so ausgebildet sind, dass bei zunehmender Kühlmediummenge im Inneren der Führungsstangen sich die Steuerstäbe in der einen Axialrichtung verschieben und bei abnehmender Kühlmediummenge im Inneren der Führungsstangen sich die Steuerstäbe in der anderen Axialrichtung verschieben.

In der erfindungsgemässen Anlage bewegen sich die Steuerstäbe entlang den zugehörigen feststehenden Führungsstangen, wobei das ohnehin im Druckgefäss vorhandene Kühlmedium nicht nur als Antriebsmittel für die Steuerstäbe dient, sondern die Steuerstäbe zugleich auch berührungslos führt. Dabei lässt sich durch einfache Auslegung der Verbindungsöffnungen und der Drosselstellen eine genaue Beziehung zwischen der veränderbaren Kühlmediumdurchflussmenge und der jeweiligen Höhenlage der Steuerstäbe herstellen. Der Antrieb der Steuerstäbe erfordert daher, im Gegensatz zum Stand der Technik, keine besondere Herstellungsgenauigkeit und weist praktisch keine Abnützung im Betrieb auf. Ein weiterer Vorteil besteht in der Kompaktheit von Antrieb und Steuerung der Steuerstäbe.

Bei der Ausführungsform der Erfindung nach Anspruch 2 macht bereits eine geringe Niveauabnahme des Kühlmediums im Druckgefäss die Fördermittel unwirksam, so dass die Steuerstäbe automatisch in ihre Sicherheitsstellung fahren können.

Die Anordnung der Verbindungsöffnungen in verschiedenen Höhen der Führungsstangen gemäss Anspruch 4 ermöglicht auf einfache Weise, die Steuerstäbe auf ganz bestimmten Höhenlagen zu halten.

Eine bevorzugte Ausführungsform der Erfindung ist in Anspruch 5 enthalten, indem die Führungskappen sowohl eine gute Führung der Steuerstäbe als auch einfache

- 4 -

Montage- und Unterhaltsbedingungen bieten.

Die Gestaltung der Führungsstangen gemäss Anspruch 6 ermöglicht eine sehr feine Einstellung der Höhenlage der Steuerstäbe und - kombiniert mit der Ausführungsform gemäss Anspruch 4 - führt sie zu einem vorteilhaften Steuerungssystem.

Die Ausführungsform nach Anspruch 7 bietet die Möglichkeit, die Kühlmediumdurchflussmenge fein und einfach zu eichen, so dass kleine Unterschiede - beispielsweise im Gewicht - der Steuerstäbe ausgeglichen werden können.

Die Ausführungsform nach Anspruch 8 erlaubt ein rasches Fahren der Steuerstäbe in ihre untere Stellung, die meistens eine Sicherheitsstellung ist.

Die Anordnung eines Führungsgitters gemäss Anspruch 9 verhindert Vibrationen oder Pendelbewegungen der Führungsstangen, wodurch die allgemeine Sicherheit der Anlage erhöht wird.

Es könnte sein, dass kurzzeitig auftretende Störungen wie z.B. kurzzeitige Schwankungen des Druckes oder der Durchflussmenge des Kühlmediums oder Dampfbildung im Kühlmedium, eine Aenderung der Höhenlage der Steuerstäbe zur Folge hätte; aus dieser geänderten Höhenlage kämen die Steuerstäbe nur allmählich wieder in ihre Sollstellung zurück. Solche kurzzeitigen Störungen könnten unter anderem den Betrieb und die Steuerung des Reaktors beeinträchtigen. Um in den genannten Fällen ein rasches Zurückkehren der Steuerstäbe in die gewünschte Stellung zu erreichen, sind gemäss der Ausführungsform nach Anspruch 11 in den Steuerstäben mehrere, quer zu deren Längsrichtung angeordnete Ringnuten vorgesehen, von denen jede mindestens einer Verbindungsöffnung zugeordnet ist. Hierdurch ergeben sich für das aus den Verbindungsöffnungen ausströmende Kühlmedium weitere Drosselstellen zwischen der Aussenfläche der Führungsstangen einerseits und den zwischen den Ringnuten in den Steuerstäben verbleibenden Stegen andererseits. Diese Drosselstellen bewirken bei einer Auslenkung der Steuerstäbe infolge kurzzeitig auftretender Störungen ein rasches Zurückführen der Steuerstäbe in ihre gewünschte Stellung.

Dieser Effekt kann noch dadurch verbessert werden, wenn gemäss Anspruch 12 mindestens eine Ringnut mit mindestens einer Stabilisierungsöffnung versehen ist, die den spaltförmigen Ringraum mit dem Innern des Druckgefässes verbindet.

Ein rasches Zurückführen der Steuerstäbe in die gewünschte Stellung kann auch mit der Ausführungsform gemäss Anspruch 17 erreicht werden, wonach die obere Hälfte der Führungsstange auf ihrer Aussenfläche mit mehreren, über ihre Länge verteilten Ringnuten versehen ist und die am oberen Ende des Steuerstabes befindliche Drosselstelle einerseits von der oberen Hälfte der Führungsstange und andererseits von mindestens einem ringförmigen, gegen die Führungsstange sich erstreckenden Vorsprung des Steuerstabes gebildet ist.

Einige Ausführungsbeispiele der Erfindung werden anhand der Zeichnung näher erläutert. Es zeigen:

Fig. 1          einen vertikalen, schematischen Schnitt
                durch eine Anlage nach der Erfindung,

Fig. 2          einen vertikalen Schnitt durch einen
                Steuerstab sowie einen Teilschnitt einer
                zugehörigen Führungsstange,

Fig. 3        einen Schnitt gemäss der Linie III-III

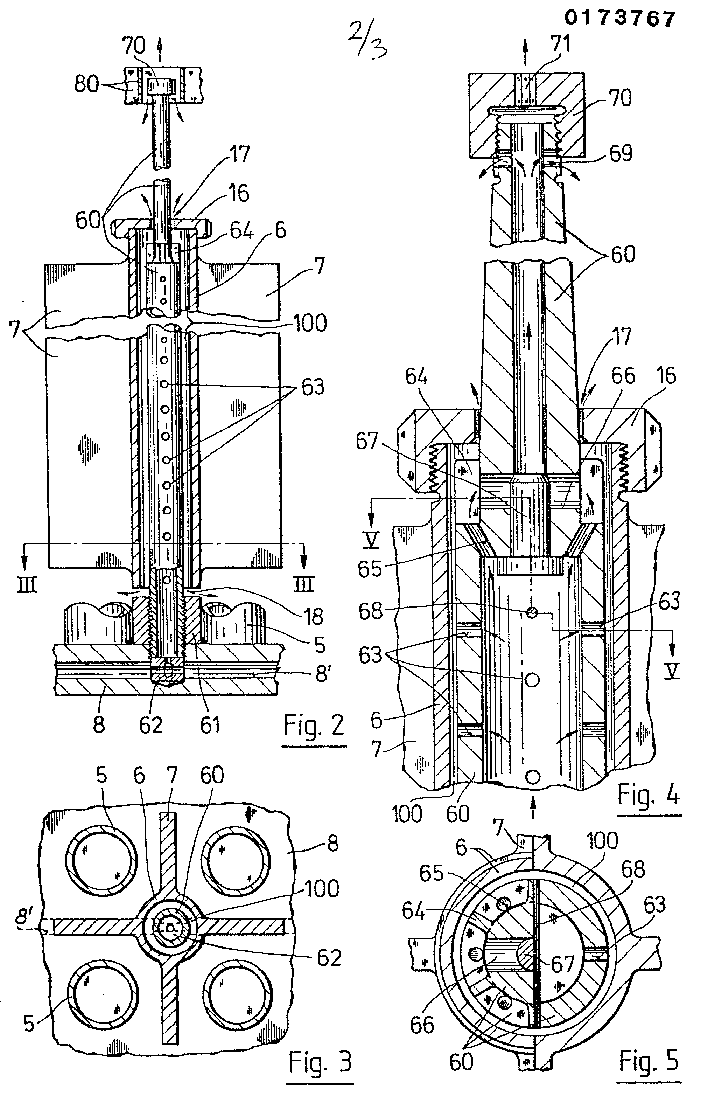

              in Fig. 2,

Fig. 4        einen vertikalen Schnitt durch die oberen
              Bereiche des Steuerstabes und der Führungsstange, in grösserem Massstab als in Fig. 2,

Fig. 5        einen Schnitt nach der gebrochenen Linie
              V-V in Fig. 4,

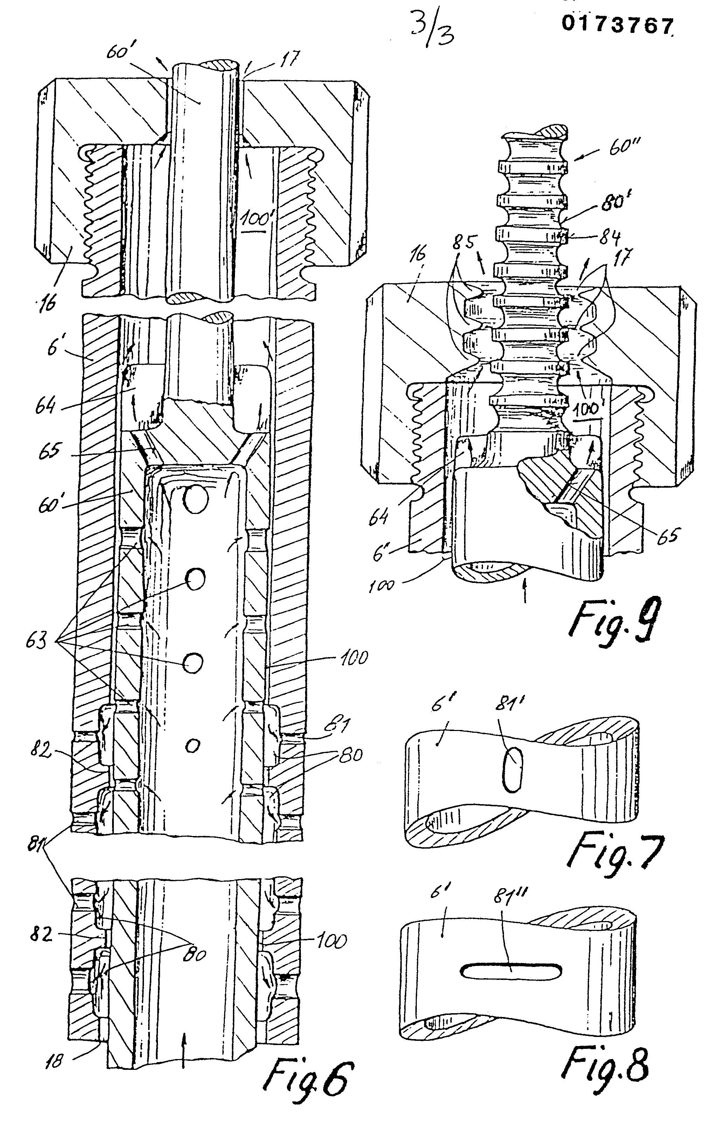

Fig. 6        einen vertikalen Schnitt durch die oberen
              Bereiche eines abgewandelten Steuerstabes
              und einer abgewandelten Führungsstange,

Fig. 7 und 8  je ein Detail eines Steuerstabes und

Fig. 9        einen vertikalen Schnitt durch die oberen
              Bereiche einer weiteren Abwandlung von
              Steuerstab und Führungsstange.

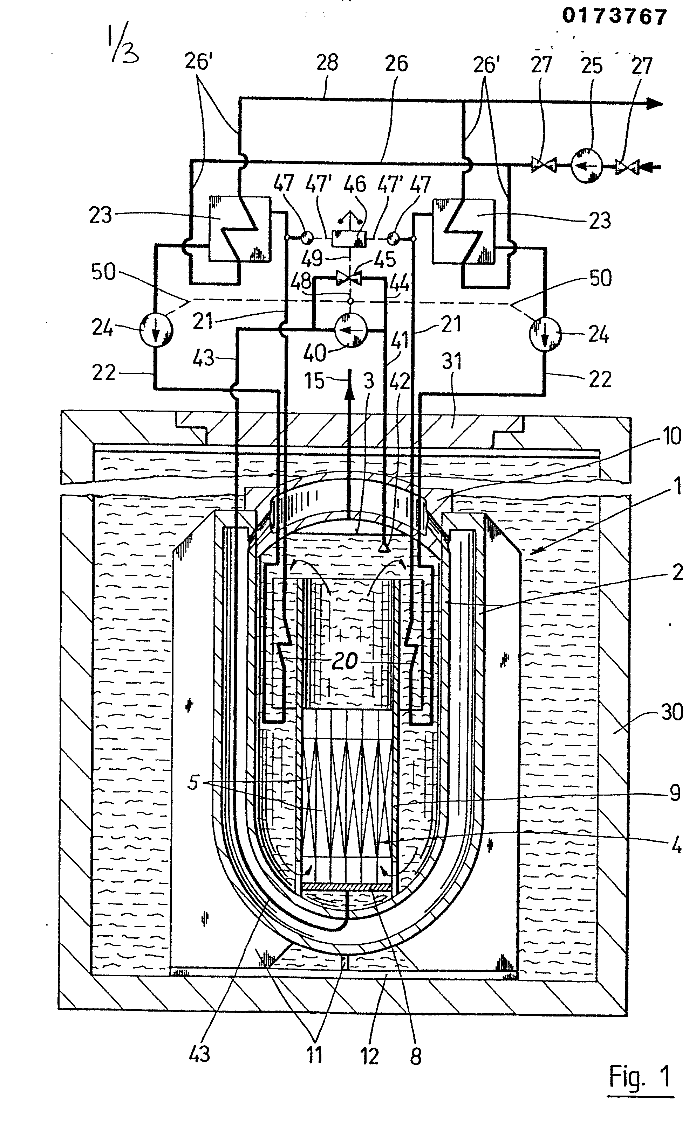

Die Anlage nach Fig. 1 enthält einen nuklearen Heizreaktor 1, in dem heisses Wasser erzeugt wird, das für
Heizungszwecke in einem in der Nähe der Anlage befindlichen Wohngebiet verwendet wird. Infolge dieser Nähe
sind hier die Sicherheitsanforderungen an den Reaktor
sehr gross. Der Reaktor 1 weist ein doppelwandiges
Druckgefäss 2 auf, in dem behandeltes, entmineralisiertes Wasser enthalten ist, das das Druckgefäss bis zu
einem Niveau 3 füllt. Ferner enthält das Druckgefäss 2
einen Reaktorkern 4, der im wesentlichen aus vertikalen,
kanalartigen, zylindrischen, mit Spaltmaterial gefüllten Brennelementen 5 und dazwischen sich erstreckenden,
an vertikal bewegbaren Steuerstäben 6 befestigten, vertikalen Absorberstäben 7 (Fig. 3) besteht. Die Brennelemente 5 ruhen auf einer Kerntragplatte 8, die sich an

**0173767**

einem sie umgebenden, vertikalen, zylindrischen Mantel 9 abstützt. Der Mantel 9 ist oben offen, stützt sich unten auf einem Boden des Druckgefässes 2 ab und weist knapp oberhalb der Kerntragplatte 8 über seinen Umfang gleichmässig verteilte Oeffnungen auf. In seinem obersten Bereich ist der Mantel 9 von zwei Wärmeübertragerflächen 20 umgeben. Das Druckgefäss 2 weist an seinem oberen Ende einen doppelwandigen Deckel 10 auf, der        geöffnet werden kann, um den Zugang zum Inneren des Druckgefässes 2 zu ermöglichen. Die Hohlräume zwischen den Doppelwänden des Druckgefässes 2 und des Deckels 10 sind miteinander verbunden und mittels nicht gezeigter Dichtungen auf bekannte Weise gegen aussen abgedichtet. Das Druckgefäss 2 ist mit vertikalen Rippen 11 versehen, die mit einer unteren horizontalen Grundplatte 12 verbunden sind, wobei die Rippen 11 sowohl eine Knautschzone zum Schutze des Reaktors 1 gegen äussere mechanische Einwirkungen als auch eine Wärmeübertragerfläche zur Nachwärmeabfuhr bei Notfällen bilden. Die Grundplatte 12 stützt sich auf dem Boden eines Containments 30 ab, das den Reaktor 1 gegen äussere mechanische Einwirkungen, inbegriffen Erdbeben und Flugzeugabsturz, und die Umgebung gegen Strahlung aus dem Reaktor schützt. Das Containment 30 ist als mit Wasser gefülltes Bassin ausgebildet und weist oben eine Abdeckung 31 auf, wobei das Bassinwasser als zusätzlicher Schutz der Umgebung gegen Strahlung, selbst bei geöffneter Abdeckung 31,              und zugleich als Wärmesenke zur Nachwärmeabfuhr aus dem Reaktor 1 im Notfall dient. In diesem Fall  werden die normalerweise mit gut wärmeisolierender Luft gefüllten Hohlräume des Druckgefässes 2 und des Deckels 10        durch in    Fig. 1 nicht gezeigte Mittel  mit gut wärmeleitendem Bassinwasser überflutet, so dass die Wärme aus dem Inneren des Druckgefässes 2 in das Bassinwasser, mit weiterer Hilfe der Rippen 11, abgeleitet wird.

In den Wärmeübertragerflächen 20 zirkuliert Wasser als sekundäres Kühlmedium. Die Wärmeübertragerflächen 20 sind je mittels einer heissen Leitung 21 und einer kalten  Leitung 22, die den Deckel 10 und die Abdeckung 31 durchstossen, mit einem Sekundärwärmeübertrager 23 verbunden, wobei jede    Leitung 22 eine Pumpe 24 aufweist. Eine weitere Pumpe 25 fördert Heiz-Wasser über    eine Speiseleitung 26, die vor und nach der weiteren Pumpe 25 jeweils ein Ventil 27 aufweist und aus welcher zwei paralelle Zweigleitungen 26' abzweigen, je durch einen der Sekundärwärmeübertrager 23 und schliesslich in eine Heizwasserleitung 28. Die Heizwasserleitung 28 führt Heizwärme zu nicht gezeigten Verbrauchern.

Die Saugseite einer Steuerpumpe 40 ist über eine Saugleitung 41 mit einem innerhalb des Druckgefässes 2 knapp unterhalb des Niveaus 3 angeordneten Venturieinlass 42 verbunden. Druckseitig ist die Steuerpumpe 40 mit einer Steuerleitung 43 verbunden, die die Abdeckung 31 und das Druckgefäss 2 durchstösst und an einem horizontalen Bohrungssystem innerhalb der Kerntragplatte 8 angeschlossen ist. Die Saug- und Druckseite der Steuerpumpe 40 sind mittels einer Umleitung 44, welche ein Steuerventil 45 enthält, verbunden. Ein Regler 46 ist mittels Signalleitungen 47'an je einem Temperaturfühler 47 an den heissen Leitungen 21 angeschlossen und regelt auf bekannte Weise über Signalleitungen 48 und 49, entsprechend der gemessenen Kühlwassertemperatur in den heissen Leitungen 21, die Drehzahl der Steuerpumpe 40 (grobe Einstellung) bzw. die Durchgangsöffnung des Steuerventils 45 (feine Einstellung).

Die Steuerpumpe 40 ist ferner mittels Signalleitungen 50 mit den Pumpen 24 in den Leitungen 22 auf an sich bekannte Weise so verbunden, dass die Steuerpumpe 40 nur dann laufen kann, wenn mindestens eine der beiden Pumpen 24 in Betrieb ist.

Eine Entgasungsleitung 15, die den Deckel 10 und die Abdeckung 31 durchdringt, verbindet den obersten Bereich des Druckgefässes 2 mit der Atmosphäre, falls erforderlich über ein nicht gezeigtes Reinigungs- und Dekontaminationssystem für radioaktive Gase.

Ebenfalls nicht gezeigte, aber an sich bekannte Hebezeuge ermöglichen die Handhabung der beweglichen Komponenten der Anlage, wie z.B. das Oeffnen und Schliessen des Deckels 10 und der Abdeckung 31 sowie die Be- und Entladung der Brennelemente 5 bei Montage und Ueberholungsarbeiten.

Die Anlage nach Figur 1 funktioniert wie folgt:

Im Normalbetrieb befinden sich die Steuerstäbe 6 und die damit verbundenen Absorberstäbe 7 auf einer bestimmten Höhe oberhalb der Kerntragplatte 8, wobei diese Höhe vom Druck bzw. von der Durchflussmenge des Wassers abhängt, das von der Steuerpumpe 40 aus dem Inneren des Druckgefässes 2 über den Venturieinlass 42 und die Saugleitung 41 angesogen wird und über die Steuerleitung 43 zur Kerntragplatte 8 weiter gefördert wird. Ein Teil des Wassers wird durch die Umleitung 44, entsprechend der eingestellten Durchtrittsöffnung des Steuerventils 45, von der Druck- zur Saugseite der Steuerpumpe 40 zurückgeführt, um die Feinregelung der Wasserdurchflussmenge in der Steuerleitung 43 zu schaffen. Die Grobregelung der Wasserdurchflussmenge in der Steuerleitung 43 geschieht mittels Einstellung der Drehzahl der Steuerpumpe 40. In der von den Absorberstäben 7 freigegebenen Zone des Kernes entfaltet sich die nukleare Reaktion zwischen den Brennelementen 5 hauptsächlich. Die resultierende Wärme wird auf das Wasser im Druckgefäss 2 übertragen. Das erwärmte Wasser steigt innerhalb des zylindrischen Mantels 9, wird an dessen oberen Ende nach unten umgelenkt und gibt die mitgeführte Wärme an die Wärmeübertragerflächen 20 ab; es fliesst weiter nach unten und tritt durch die Mantel-öffnungen oberhalb der Kerntragplatte 8 wieder in den Kern 4 ein, wo der Zyklus von vorne anfängt.

In den Wärmeübertragerflächen 20 erwärmt sich das sekundäre Kühlwasser und fördert die aufgenommene Wärme entlang der heissen Leitungen 21 zu den Sekundärwärmeübertragern 23, wo die Wärme wieder abgegeben wird und das abgekühlte Kühlwasser durch die Leitungen 22 und die Pumpen 24 wieder zu den Wärmeübertragerflächen 20 strömt. Die weitere Pumpe 25 fördert Heizwasser über die Speiseleitung 26 und die Zweigleitungen 26' in den Sekundärwärmeübertrager 23, wo es erwärmt wird, und in die Heizwasserleitung 28, die das erwärmte Heizwasser zu nicht gezeigten Verbrauchern führt. Unter Umständen ist es vorteilhaft, auch das Heizwasser in einem geschlossenen Kreislauf umzuwälzen. Die Ventile 27 sind normalerweise offen und werden nur bei Montage- und Ueberholungsarbeiten an der weiteren Pumpe 25, geschlossen.

Solange die Temperatur des sekundären Kühlwassers stabil bleibt, hält der Regler 46 die Drehzahl der Steuerpumpe 40 und die Durchtrittsöffnung des Steuerventils 45 konstant. Tritt nun beispielsweise eine Temperaturerhöhung im Kühlwasser auf, was durch die Temperaturfühler 47 festgestellt und durch die Signalleitungen 47' dem Regler 46 weitergegeben wird, so öffnet dieser über die Signalleitung 49 das Steuerventil 45, wodurch die Kühlwasserdurchflussmenge durch die Steuerleitung 43 reduziert wird. Demzufolge sinken in einer weiter unten erklärten Weise die Steuerstäbe 6 mit den Absorberstäben 7, wodurch weniger Wärme im Kern 4 des Reaktors erzeugt wird. Genügt die volle Oeffnung des Steuerventils 45 nicht, um die Solltemperatur des Kühlwassers aufrecht zu erhalten, so wird die Drehzahl der Steuerpumpe 40 vom Regler 46 über die Signalleitung 48 verringert.

Bei einer Temperaturabnahme des Kühlwassers in der heissen Leitung 21 reagiert der Regler 46 umgekehrt wie eben beschrieben.

Der Sollwert der Kühlwassertemperatur, wird in Abhängigkeit der gewünschten Temperatur und Durchflussmenge des Heizwassers in der Heizleitung 28 eingestellt.

Bei einem Sinken des Niveaus 3 im Druckgefäss 2 bilden sich in dem Venturieinlass 42 Dampfblasen, so dass die Steuerpumpe 40 kein Kühlwasser mehr fördert, wodurch die Steuerstäbe durch das eigene Gewicht (weiter unten erklärt) automatisch in ihre Sicherheitsstellung gelangen und den Betrieb des Reaktors 1 unterbrechen. Im Inneren des Druckgefässes 2 entstehen bekanntlich infolge der Strahleneinwirkungen Gase, die auf übliche Weise durch die Entgasungsleitung 15 abgeführt werden.

Gemäss Fig. 2 bis 5 besteht jeder Steuerstab 6 aus einem vertikalen, zylindrischen Rohr, das mit vier vertikalen, radial angeordneten und am Umfang gleichmässig verteilten Absorberstäben 7 einteilig verbunden ist. Jeder Steuerstab 6 umgibt koaxial eine ebenfalls rohrförmige Führungsstange 60, wobei zwischen beiden ein spaltförmiger Ringraum 100 gebildet ist, der sich über die ganze Länge des Steuerstabes erstreckt. Die Führungsstangen 60 sind etwa doppelt so lang wie die Steuerstäbe 6 und weisen in ihrer oberen Hälfte kleinere Innen- und Aussendurchmesser als in ihrer unteren Hälfte auf. In jeder Führungsstange 60 ist im Bereich ihres unteren Endes ein Aussengewinde vorgesehen, mit dem sie in eine Hülse 61 und eine daran anschliessende Bohrung in der Kerntragplatte 8 eingeschraubt ist. Die Bohrung erstreckt sich bis zu einer horizontalen, innerhalb der Kerntragplatte 8 angeordneten Bohrung 8' vertikal. Ein Stöpsel 62, welcher in der vertikalen Bohrung steckt, dient als Anschlag für die Führungsstange 60 und ist koaxial zur horizontalen Bohrung 8' ganz, und koaxial zur vertikalen Bohrung oben halb durchbohrt, so dass das Innere der Führungsstange 60 mit der horizontalen Bohrung 8' kommuniziert. Sämtliche horizontalen Bohrungen 8' sind miteinander verbunden und bilden zusammen ein System, das an der Steuerleitung 43 angeschlossen ist.

Aus Fig. 3 ist ersichtlich, dass die Absorberstäbe 7 jeweils zwei benachbarte Brennelemente 5 trennen. Sie sind aus einem Material hergestellt, welches die für die Reaktion zuständigen Atomteilchen - in dem vorliegenden Beispiel Neutronen - absorbiert.

In ihrer unteren Hälfte weist jede Führungsstange 60 horizontale Verbindungsöffnungen 63 auf, die paarweise übereinander, jeweils um $90^{\circ}$ gegeneinander versetzt angeordnet sind und das Innere der Führungsstangen 60 mit dem Spalt 100 verbinden. Der Abstand zwischen zwei aufeinanderfolgenden Paaren von Verbindungsöffnungen 63 nimmt mit zunehmender Höhe ab. Im Bereich des Ueberganges von dem grösseren zu dem kleineren Durchmesser der Führungsstange 60 sind aussen sechs vertikal und radial angeordnete und am Umfang der Führungsstange 60 gleichmässig verteilte Verstärkungsrippen 64 vorgesehen, die auch als Werkzeugansatz zum Ein- und Ausschrauben der Führungsstange 60 dienen, wobei diese unabhängig vom zugehörigen Steuerstab 6 ein- und ausgebaut werden kann. Zwischen je zwei benachbarten Verstärkungsrippen 64 sind schrägverlaufende weitere Verbindungsöffnungen 65 angeordnet, die, vom Inneren der unteren Hälfte der Führungsstange 60 ausgehend, nach oben verlaufen. Knapp darüber verbinden zwei zusätzliche, horizontale, grössere Verbindungsöffnungen 66 das Innere der oberen Hälfte der Führungsstange 60, zwischen zwei Verstärkungsrippen 64 mündend, mit dem Spalt 100. Ein vertikaler zylindrischer und einen ebenfalls zylindrischen Kopf aufweisender Ventilzapfen 67 ist gleitend von unten in die Bohrung am oberen Ende der unteren Hälfte der Führungsstange 60 eingesteckt, wobei er in seiner obersten Stellung - mit dem Kopf im Anschlag an einer Schulter im Innern der Führungsstange 60 - die zusätzlichen Verbindungsöffnungen 66 stark drosselt und in seiner untersten Stellung - im Anschlag an einem horizontalen, durch die Führungsstange 60 gesteckten Haltestift 68 - die zusätzlichen Verbindungsöffnungen 66 freigibt.

Das oberste Ende eines jeden Steuerstabes 6 ist mit einer aufgeschraubten, einen äusseren Sechskant aufweisenden Führungskappe 16 versehen, die mit der oberen Hälfte der Führungsstange 60 eine Drosselstelle 17 bildet, die nahezu laminare Strömungsverhältnisse aufweist und bedeutend kleiner als eine untere Drosselstelle 18 am anderen Ende des Steuerstabes 6 ist. Die obere Hälfte der Führungsstange 60 weist die Form eines sich leicht nach oben verjüngenden Kegels auf, so dass mit zunehmender Höhenlage des Steuerstabes 6 der Drosselquerschnitt der oberen Drosselstelle 17 grösser wird.

Am oberen Ende jeder Führungsstange 60, ist eine Regulierkappe 70 von oben her aufgeschraubt, die eine vertikale, durchgehend sechskantige Zentralöffnung 71 enthält. Die Zentralöffnung 71 dient einerseits als Verbindung zwischen dem Inneren der Führungsstange 60 und dem Inneren des Druckgefässes 2 und andererseits als Werkzeugansatz für das Drehen der Regulierkappe 70. Zwei sich gegenüberliegende, horizontale Durchgangsbohrungen 69 werden beim Abwärtsdrehen der Regulierkappe 70 allmählich zugedeckt. Ein mit dem Mantel 9 fest verbundenes Führungsgitter 80 stützt die Führungsstangen 60 gegen Vibrationen und/oder Pendelungen.

Die Anordnung nach Fig. 2 bis 5 funktioniert folgendermassen: Hat die Steuerpumpe 40 eine konstante Drehzahl, so bleibt bei gleichbleibender Durchtrittsöffnung des Steuerventils 45 auch die Durchflussmenge in der Steuerleitung 43 konstant. Durch die Bohrungen 8' der Kerntragplatte 8 strömt somit eine konstante Menge Kühlmittel, das durch die Bohrungen im Stöpsel 62 in das Innere der Führungsstange 60 gelangt und über die Verbindungsöffnungen 63 sowie 65 in den Ringraum 100. Von hier aus strömt ein Teil der Menge über die vom Ventilzapfen 67 gedrosselten, zusätzlichen Verbindungsöffnungen 66, die Zentralöffnung 71 und die Durchgangsbohrungen 69 in das Innere des Druckgefässes 2. Ein anderer Teil verlässt den Spaltraum 100 über die obere Drosselstelle 17, während ein dritter Teil der Menge über die untere Drosselstelle 18 in das Innere des Druckgefässes 2 strömt. Dabei bewirkt die Führungskappe 16 durch ihre Formgebung das Einhalten einer im wesentlichen laminaren, gleichmässig verteilten Strömung durch die obere Drosselstelle 17, so dass eine sichere Zentrierung des Steuerstabes 6 erreicht wird.

Steigt nun die Drehzahl der Steuerpumpe 40 oder wird die Durchtrittsöffnung des Steuerventils 45 verkleinert, so steigt die Durchflussmenge durch den bereits beschriebenen Weg und somit der Druck stromaufwärts der Führungskappe 16. Infolgedessen hebt sich die Führungskappe 16 mitsamt dem Steuerstab 6 und den Absorberstäben 7. Dadurch werden die unteren Verbindungsöffnungen 63 nicht mehr vom Steuerstab überdeckt und das sie durchströmende Kühlmedium gelangt direkt, d.h. nicht mehr über den Ringraum 100, in das Innere des Druckgefässes 2. Da dieses Kühlmedium nicht mehr      die               untere Drosselstelle     18 durchfliessen muss, kann es     schneller aus
der Führungsstange 60 ausströmen.      Auf diese Weise baut
sich der Druck unterhalb der Führungskappe 16 zunehmend ab,
bis ein Gleichgewicht zwischen den auf dem Steuerstab 6 und
den Absorberstäben 7 wirkenden Kräften hergestellt ist und
die  Bewegung, zum Stillstand kommt.

Wenn      bei einer     Drehzahlabnahme der Steuerpumpe 40
und/oder einer Vergrösserung der Durchtrittsöffnung des
Steuerventils 45,        der Druck unterhalb der Führungskappe 16 sinkt, senkt sich der Steuerstab 6 mit den    Absorberstäben 7, bis eine neue Gleichgewichtslage erreicht ist. Bei
einer plötzlichen Unterbrechung der Kühlwasserzufuhr in die
horizontalen Bohrungen 8' der Kerntragplatte 8,
sinkt der Druck unterhalb der Führungskappe 16 sehr rasch,
und damit auch der Druck unterhalb des Ventilzapfens 67, so
dass dieser durch das Eigengewicht auf den Haltestift 68
fällt und die vollen Querschnitte der zusätzlichen Verbindungsöffnungen 66 freigibt.  Das druckarme Kühlwasser
kann nun ungedrosselt durch die zusätzlichen Verbindungsöffnungen 66, das Innere der oberen Hälfte der Führungsstange 60, die Durchgangsbohrungen 69 und die Zentralöffnung 71 in das Innere  des Druckgefässes 2      strömen,
und es     findet ein Hinunterfallen der Absorberstäbe 7 in
ihre Sicherheitsstellung                statt.

Die über die Höhe verteilte Anordnung der Verbindungsöffnungen 63 bewirkt, dass jeder Vorbeigang des unteren Randes eines Stabes 6
an einer Oeffnung 63 eine relativ grosse Aenderung der durch
die Führungsstange 60 zirkulierenden Kühlwassermenge zur
Folge hat. Daraus ergeben sich eine Reihe von stufenweise
aufeinanderfolgenden, bevorzugten Höhenlagen des Steuerstabes 6,
welche die Grobeinstellung der Steuerung wesentlich vereinfacht. Dabei berücksichtigt der mit zunehmender Höhenlage abnehmende  Abstand der Oeffnungen

die Bedürfnisse der Steuerung beim Betrieb mit hoher Last. Andererseits dient die allmähliche Aenderung der oberen Drosselstelle 17, bei Aenderungen der Höhenlage des Steuerstabes 6, infolge der kegeligen Form der oberen Hälfte der Führungsstange 60 der Feineinstellung der Steuerung.

Da jeder Steuerstab 6 und die dazugehörigen Absorberstäbe 7 gewisse Abweichungen in Form und Gewicht, infolge von unvermeidlichen Herstellungs-Toleranzen, gegenüber den übrigen aufweist, sind die Regulierkappen 70 zweckmässig. Sie ermöglichen durch einfaches Drehen die Einstellung der Durchflussquerschnitte der Durchgangsbohrungen 69 und dadurch das individuelle Ausgleichen der genannten Abweichungen unter den Steuerstäben 6, so dass diese in jedem Betriebszustand der Anlage etwa die gleiche Höhenstellung aufweisen.

Das Führungsgitter 80 verhindert, ohne die Einstellbarkeit der Regulierkappen 70 zu beeinträchtigen, Vibrationen und/oder Pendelungen der Führungsstangen 60 und trägt somit wesentlich zur allgemeinen Sicherheit der Anlage bei ; damit zugleich unbeabsichtigte Verschiebungen *werden* der Regulierkappen verhindert.

Ausser der gezeigten Ausführungsform ist es z.B. möglich, das Kühlmedium am oberen Ende der Führungsstangen 60 einzuführen, sowie das Abwärtsfahren der Steuerstäbe in ihre Sicherheitsstellung mittels Federn zu unterstützen.

Gemäss Fig. 6 ist die Führungsstange 60' nur in ihrer unteren Hälfte rohrförmig ausgebildet, während die obere Hälfte zylindrisch und im Durchmesser kleiner als der äussere Durchmesser der unteren Hälfte ist. An der Uebergangsstelle vom grösseren auf den kleineren Durchmesser sind wiederum sechs Verstärkungsrippen 64 angeordnet, zwischen denen die weiteren Verbindungsöffnungen 65 münden.

Abweichend von der Ausführungsform nach Fig. 2 sind die Verbindungsöffnungen 63 nur in der ˪oberen‚ Hälfte der unteren Hälfte der Führungsstangen angebracht, wobei der Durchmesser der einzelnen Oeffnungen 63 mit zunehmender Höhe grösser wird. Der vertikale Abstand der Oeffnungen 63 voneinander ist gleichbleibend. Die weiteren Verbindungsöffnungen 65 verbinden das Innere der Führungsstange 60' mit dem erweiterten Teil 100' des Ringraumes 100 zwischen der Führungskappe 16 einerseits und den Rippen 64 andererseits. Die Innenfläche des Steuerstabes 6' weist horizontal angeordnete Ringnuten 80 auf, deren Höhe gleich dem axialen Abstand zwischen der obersten Begrenzung einer Verbindungsöffnung 63 und der untersten Begrenzung der ihr benachbarten, auf derselben Mantellinie der Führungsstange befindlichen Verbindungsöffnung 63 ist. Etwa auf der mittleren Höhe jeder Ringnut sind zwei als horizontale zylindrische Bohrungen ausgebildete Stabilisierungsöffnungen 81 vorgesehen, die den spaltförmigen Ringraum 100 mit dem Inneren des Druckgefässes verbinden, und deren Durchmesser nach oben hin abnimmt. Die Stabilisierungsöffnungen 81 ˪sind‚ in der unteren Hälfte des Steuerstabes 6' angeordnet. Der axiale Abstand zwischen zwei benachbarten Ringnuten 80 wird so klein wie möglich gewählt. Zwischen den Ringnuten 80 bleiben daher diese trennende ringartige Stege 82 stehen, deren axiale Breite etwa gleich dem grössten Durchmesser der Verbindungsöffnungen 63 ist.

Die Stabilisierung der Höhenlage des Steuerstabes 6' gemäss Fig. 6 geschieht wie folgt. Bei einem konstanten Druck bzw. einer konstanten Fördermenge des dem Inneren der Führungsstange 60' zugeführten Kühlwassers, stellt sich eine bestimmte Höhenlage des Steuerstabes 6' ein, wobei das Kühlwasser aus dem Inneren der Führungsstange 60' über die Verbindungsöffnungen 63 und die weiteren Verbindungsöffnungen 65 in den Ringraum 100 bzw. 100' bzw. in das Innere des Druckgefässes strömt. Die Kühlwassermenge, die in die Ringräume 100 und 100' gefördert wird, verlässt diese über die untere Drosselstelle 18, die obere Drosselstelle 17 und die Stabilisierungsöffnungen 81. Infolge der Druckverteilung innerhalb des Steuerstabes 6' drosselt mindestens ein Steg 82 den oberen Bereich einer Verbindungsöffnung 63, so dass ein Teil des Kühlwassers - anstatt über die untere Drosselstelle 18 und die Stabilisierungsöffnungen 81 zu strömen - zu den weiteren Verbindungsöffnungen 65 bzw. zur oberen Drosselstelle 17 und zu gegebenenfalls vom Steuerstab 6' nicht überdeckten Verbindungsöffnungen 63 strömt. Solange der Druck bzw. die Fördermenge des Kühlwassers konstant bleibt, gleichen sich das Gewicht des Steuerstabes 6' und der an ihm befestigten, nichtgezeigten Absorberstäbe, die hydrodynamischen Kräfte, die vom im Druckgefäss strömenden Kühlwasser auf den Steuerstab und die Absorberstäbe ausgeübt werden, und die Kräfte, die infolge der Druckunterschiede inner- und ausserhalb des Steuerstabes 6' entstehen, aus. Jede Höhenverschiebung des Steuerstabes 6' bewirkt eine Aenderung des Kühlwasserdurchsatzes durch die gedrosselten Verbindungsöffnungen 63 und damit auch eine Aenderung der Verteilung des Kühlwasserstromes innerhalb der Führungsstange 60' bzw. der Ringräume 100 und 100'. Dadurch ändert sich die auf den Steuerstab 6' wirkende Druckdifferenz erheblich. Die Stabilisierungsöffnungen 81 haben dabei eine multiplizierende Wirkung auf diese Druckdifferenzen, da bei einer Aenderung der Drosselwirkung der Verbindungsöffnungen 63, die hervorgerufene Aenderung der über die Stabilisierungsöffnungen 81 strömenden Kühlwassermenge um ein Vielfaches grösser ist als die entsprechende Aenderung der allein durch die untere Drosselstelle 18 strömenden Kühlwassermenge.

So wird bei einer Verschiebung des Steuerstabes 6' nach oben die Drosselwirkung der Stege 82 auf die Verbindungsöffnungen 63 verringert, es fliesst demzufolge mehr Kühlwasser aus der Führungsstange 60' heraus und der Druck unterhalb der Führungskappe 16 fällt, so dass der Steuerstab 6' nach unten in seine ursprüngliche Lage zurücksinkt. Bei einer Abwärtsverschiebung des Steuerstabes 6' dagegen werden die Verbindungsöffnungen 63 von den Stegen 82 stärker gedrosselt und mehr Kühlwasser wird innerhalb der Führungsstange 60' aufgehalten, so dass der Druck unterhalb der Führungskappe 16 steigt und den Steuerstab 6' nach oben in seine ursprüngliche Lage zurückschiebt.

Besonders stabil sind jene Lagen des Steuerstabes 6', in denen Verbindungsöffnungen 63 und Stabilisierungsöffnungen 81 einander genau gegenüber liegen, da in diesem Falle geringe Verschiebungen relativ grosse Drosselwirkungen auf die Verbindungsöffnungen 63 hervorrufen.

Der Durchtrittsquerschnitt der Verbindungsöffnungen 63 und der Stabilisierungsöffnungen 81 kann bei Bedarf erheblich dadurch vergrössert werden, dass mehr als zwei solche Oeffnungen in einer Höhenlage vorgesehen werden. Es ist auch möglich, grössere Durchtrittsquerschnitte durch besondere Formgebung der Verbindungs- und der Stabilisierungsöffnungen zu erreichen, wie dies für eine Stabilisierungsöffnung in Fig. 7 in Form eines axialen Langloches 81' und in Fig. 8 in Form eines quer zur Längsrichtung angeordneten Langloches 81" dargestellt ist.

Gemäss Fig. 9 hat die Führungsstange 60", wie im Beispiel nach Fig. 6, eine rohrförmige, zylindrische untere Hälfte, hingegen eine leicht konische, sich nach oben hin verjüngende obere Hälfte. Der grösste Durchmesser der oberen Hälfte der Führungsstange 60" ist kleiner als der äussere Durchmesser ihrer unteren Hälfte. Die sechs schräg angeordneten Verbindungsöffnungen 65, die zwischen den Verstärkungsrippen 64 verlaufen, verbinden das Innere der Führungsstange 60" mit den Ringräumen 100 und 100', wogegen die untere Führungsstangenhälfte keine Verbindungsöffnungen aufweist. Die obere, konische Hälfte der Führungsstange 60" weist entlang ihrer Höhe gleichmässig verteilte horizontale Ringnuten 80' auf, die voneinander mittels konischen Stegen 84 getrennt sind.

Abweichend vom Steuerstab 6' in Fig. 6, weist der Steuerstab 6" keine Stabilisierungsöffnungen auf. Dafür hat die am oberen Ende aufgeschraubte Führungskappe 16 drei ringförmige, horizontale, gegen den konischen Teil der Führungsstange sich erstreckende Vorsprünge 85, die mit der Führungsstange 60" drei ringförmige obere Drosselstellen 17 bilden. Am unteren Ende des Steuerstabes 6" befindet sich wiederum die in Fig. 9 nichtgezeigte ringförmige, untere Drosselstelle, die gleich wie die untere Drosselstelle 18 in Fig. 6 ausgebildet ist. Die drei Vorsprünge 85 tangieren eine gedachte Kegelfläche, die paralell zur kegeligen oberen Hälfte der Führungsstange 60" verläuft, während der gegenseitige Abstand der Vorsprünge gleich ist, wie der zwischen den oberen Kanten zweier benachbarter Stege 84.

Die Drosselstellen 17 bewirken eine Stabilisierung der Höhenlage des Steuerstabes 6" folgendermassen. Die in Fig. 9 gezeigte Position, in der die Vorsprünge 85 der Steuerstäbe etwas oberhalb der oberen Kanten der benachbarten Stege 84 stehen, ist eine bevorzugte stabile Position. Eine sehr kleine, durch kurzzeitigen Anstieg des Kühlwasserdruckes bedingte Verschiebung des Steuerstabes 6" nach oben, hat eine wesentliche Vergrösserung des Strömungsquerschnitts in den Drosselstellen zur Folge, wodurch der Druck sofort sinkt und der Steuerstab wieder in seine stabile Position zurückfällt. Es stellt sich deshalb für einen bestimmten konstanten Druck immer eine Position ein, bei der die Vorsprünge 85 leicht über der oberen Kante der Stege 84 liegen. Es kann auch ein einziger Vorsprung 85 die gleiche Wirkung erzielen, wie die drei in Fig. 9 gezeigten. Durch das Vorsehen mehrerer Vorsprünge wird jedoch sichergestellt, dass auch bei einer Beschädigung von zwei Vorsprüngen noch ein einwandfreies Funktionieren der Anlage gewährleistet ist. Abweichend vom Beispiel nach Fig. 9 können die Vorsprünge auch in der unteren Drosselstelle angeordnet werden, wobei dann die Ringnuten an der unteren Hälfte der Führungsstange 60" anzubringen sind. Die Stege 84 können auch zu jeweils einer Kante zusammenschrumpfen.

Der Querschnitt der Ringnuten 80 und 80' kann von den gezeigten Formen abweichen. Die Ringnuten können auch schraubenlinienförmigen Verlauf haben.

Es kann ferner erwünscht sein, Stellungsgeber vorzusehen, die die Höhenlage der Steuerstäbe bzw. der Absorberstäbe für Beobachter ausserhalb des Druckgefässes anzeigen. Solche Stellungsgeber können beispielsweise als Sonar-Geräte ausgelegt werden, die von der Kerntragplatte aus die Höhenlage der Steuerstäbe ermitteln und über Radio nach aussen informieren. Sie können auch als magnetische Abtaster ausgebildet sein, die über Signalleitungen mit einem Komandoraum der Anlage verbunden sind.

Einfachheitshalber wurde in dem beschriebenen Ausführungsbeispiel nach Fig. 1 nur die Einwirkung der Temperatur auf den Regler 46 gezeigt. Ueblicherweise wirken auch mindestens der Druck im Druckgefäss 2 und die - mittels eines Neutronenflussmessgerätes gemessene - Neutronenstrahlung im Kern auf den Regler 46.

P a t e n t a n s p r ü c h e

1. Anlage mit einem nuklearen Reaktor, insbesondere Heizreaktor, der ein Druckgefäss aufweist, in dem ein Kühlmedium sowie ein Reaktorkern enthalten sind, der im wesentlichen aus geraden vertikalen, kanalartigen, Spaltmaterial enthaltenden Brennelementen und dazwischen angeordneten, vertikal bewegbaren Steuerstäben besteht, an denen Absorberstäbe befestigt sind, wobei Fördermittel vorhanden sind, die zum Bewegen der Steuerstäbe Kühlmedium aus dem Druckgefäss unter Druck setzen, dadurch g e k e n n z e i c h n e t, dass jeder rohrförmige Steuerstab unter Freilassung eines mindestens in ihrer unteren Hälfte spaltförmigen Ringraumes eine ebenfalls rohrförmige, relativ zu den Brennelementen unbewegliche Führungsstange umgibt, die länger als der Steuerstab ist, dass die Fördermittel druckseitig mit dem Inneren der Führungsstangen verbunden sind, dass jeder spaltförmige Ringraum einerseits über Verbindungsöffnungen mit dem Inneren der zugehörigen Führungsstange und andererseits über mindestens zwei verschieden stark wirkende, im wesentlichen ringförmige Drosselstellen, von denen jeweils eine am einen Ende und die andere am anderen Ende des zugehörigen Steuerstabes angeordnet ist, mit dem Inneren des Druckgefässes kommuniziert und dass die Verbindungsöffnungen und die Drosselstellen so ausgebildet sind, dass bei zunehmender Kühlmediummenge im Inneren der Führungsstangen sich die Steuerstäbe in der einen Axialrichtung verschieben und bei abnehmender Kühlmediummenge im Inneren der Führungsstangen sich die Steuerstäbe in der anderen Axialrichtung verschieben.

2. Anlage nach Anspruch 1, mit flüssigem Kühlmedium, das auf einem konstanten Niveau im Druckgefäss gehalten wird, dadurch gekennzeichnet, dass die Fördermittel saugseitig mit dem Kühlmedium nahe unterhalb dessen Niveau kommunizieren.

3. Anlage nach Anspruch 2, dadurch gekennzeichnet, dass die Fördermittel aus mindestens einer drehzahlgeregelten Pumpe bestehen, deren Saug- und Druckseite über eine ein regelbares Drosselorgan aufweisende Umleitung miteinander verbunden sind.

4. Anlage nach einem der Ansprüche 1 bis 3, dadurch gekennzeichnet, dass die Verbindungsöffnungen entlang der Führungsstangen verteilt angeordnet sind.

5. Anlage nach einem der Ansprüche 1 bis 4, dadurch gekennzeichnet, dass die obere Hälfte der Führungsstangen einen kleineren Durchmesser als die untere Hälfte aufweist, dass die Verbindungsöffnungen in der unteren Hälfte der Führungsstangen angeordnet sind und dass die Steuerstäbe an ihrem oberen Ende je eine abnehmbare Führungskappe aufweisen, die jeweils mit der oberen Hälfte der zugehörigen Führungsstange zusammen die obere Drosselstelle bildet, wobei diese Drosselstelle so gestaltet ist, dass sie vom Kühlmedium im wesentlichen laminar durchströmt wird.

6. Anlage nach Anspruch 5, dadurch gekennzeichnet, dass der äussere Durchmesser der oberen Hälfte der Führungsstangen nach oben hin abnimmt.

7. Anlage nach Anspruch 5 oder 6, dadurch gekennzeichnet, dass die Führungsstangen an ihrem oberen Ende mindestens eine regelbare Durchgangsbohrung aufweisen, die das Innere der betreffenden Führungsstange mit dem Inneren des Druckgefässes verbindet.

8. Anlage nach Anspruch 7, dadurch gekennzeichnet, dass die Kühlmediumzufuhr zur Durchgangsbohrung innerhalb jeder Führungsstange mindestens ein vom Druck des Kühlmediums gesteuertes Drosselorgan aufweist, das beim Unterschreiten eines vorgegebenen Kühlmediumdruckes die Zufuhr zur Durchgangsbohrung freigibt.

9. Anlage nach einem der Ansprüche 5 bis 8, wobei die Brennelemente an einer mit dem Druckgefäss verbundenen Kerntragplatte befestigt sind, dadurch gekennzeichnet, dass das obere Ende der Führungsstangen an einem am Druckgefäss befestigten Führungsgitter abgestützt ist.

10. Anlage nach Anspruch 4, dadurch gekennzeichnet, dass der Abstand der Verbindungsöffnungen voneinander nach oben hin kleiner ist.

11. Anlage nach Anspruch 4, dadurch gekennzeichnet, dass die den spaltförmigen Ringraum begrenzende Fläche der Führungsstangen glatt ist und die den spaltförmigen Ringraum begrenzende Fläche der Steuerstäbe jeweils mehrere, quer zur Längsrichtung der Steuerstäbe angeordnete Ringnuten aufweist, wobei jeder Ringnut mindestens eine Verbindungsöffnung zugeordnet ist.

12. Anlage nach Anspruch 11, dadurch gekennzeichnet, dass mindestens eine Ringnut mindestens eine Stabilisierungsöffnung aufweist, die den spaltförmigen Ringraum mit dem Inneren des Druckgefässes verbindet.

13. Anlage nach Anspruch 12, dadurch gekennzeichnet, dass die Stabilisierungsöffnung als in Längsrichtung des Steuerstabes sich erstreckendes Langloch ausgebildet ist.

14. Anlage nach Anspruch 12, dadurch gekennzeichnet, dass die Stabilisierungsöffnung als in Querrichtung des Steuerstabes sich erstreckendes Langloch ausgebildet ist.

15. Anlage nach den Ansprüchen 4 und 11, dadurch gekennzeichnet, dass der Durchtrittsquerschnitt der einzelnen Verbindungsöffnungen nach oben hin zunimmt.

16. Anlage nach Anspruch 12, mit mehreren über die Länge des Steuerstabes verteilt angeordneten Stabilisierungsöffnungen, dadurch gekennzeichnet, dass der Durchtrittsquerschnitt der einzelnen Stabilisierungsöffnungen nach oben hin abnimmt.

17. Anlage nach Anspruch 1, wobei die obere Hälfte der Führungsstangen einen kleineren Durchmesser als ihre untere Hälfte aufweist, dadurch gekennzeichnet, dass die obere Hälfte der einzelnen Führungsstangen auf ihrer Aussenfläche mehrere, quer zur Längsrichtung der Führungsstangen angeordnete Ringnuten aufweist und dass die jeweils am oberen Ende des Steuerstabes befindliche Drosselstelle einerseits von der oberen Hälfte der zugehörigen Führungsstange und andererseits von mindestens einem ringförmigen, gegen die Führungsstange sich erstreckenden Vorsprung des Steuerstabes gebildet ist.

Fig. 1

0173767

2/3

Fig. 2

Fig. 3

Fig. 4

Fig. 5

Fig.6

Fig.7

Fig.8

Fig.9

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl.4) |
|---|---|---|---|
| X | DE-A-1 900 410 (AKTIEBOLAGET ATOMENERGIE) <br> * Insgesamt * | 1,3,8, 17 | G 21 C 7/16 |
| | --- | | |
| A | GB-A- 983 595 (U.K.A.E.A.) <br> * Seite 2, rechte Spalte, Zeilen 92-110; Seite 3, linke Spalte, Zeile 60 - rechte Spalte, Zeile 92; Abbildungen 1,2 * | 1 | |
| | --- | | |
| A | DE-B-1 178 526 (SIEMENS) <br> * Spalte 3, Zeilen 33-40; Spalte 4, Zeilen 7-21; Anspruch 1; Abbildungen 1,2 * | 1,17 | |
| | --- | | |
| A | EP-A-0 031 541 (AB ASEA) <br> * Seite 4, Zeile 29 - Seite 6, Zeile 3; Abbildungen 1a,1b * | 1,2 | RECHERCHIERTE SACHGEBIETE (Int Cl 4) |
| | ----- | | G 21 C 7/00 |

Der vorliegende Recherchenbericht wurde für alle Patentansprüche erstellt.

| Recherchenort <br> DEN HAAG | Abschlußdatum der Recherche <br> 04-12-1985 | Prüfer <br> JANDL F. |
|---|---|---|